# EUROPEAN PATENT SPECIFICATION

(11) **EP 4 273 715 B1**
(45) Date of publication and mention of the grant of the patent: **25.11.2026**
(21) Application number: 21924489.4
(22) Date of filing: 31.12.2021
(51) Int. Cl.: G06F 8/38, G06F 16/29, G01C 21/36, G01C 21/00, G06F 3/04817, G09B 29/00

(54) **METHOD AND APPARATUS FOR DISPLAYING MAP, AND ELECTRONIC DEVICE**
VERFAHREN UND VORRICHTUNG ZUR ANZEIGE EINER KARTE UND ELEKTRONISCHE VORRICHTUNG
PROCÉDÉ ET APPAREIL DESTINÉS À L'AFFICHAGE, ET DISPOSITIF ÉLECTRONIQUE

(30) Priority: 08.02.2021 CN 202110182916
(43) Date of publication of application: 08.11.2023
(73) Proprietor: Huawei Technologies Co., Ltd., Shenzhen, Guangdong 518129 (CN)
(72) Inventor: LIU, Long, Shenzhen, Guangdong 518129 (CN)
(74) Representative: Gill Jennings & Every LLP
(86) International application number: PCT/CN2021/143531
(87) International publication number: WO 2022/166496

(56) References cited:
- CN-A- 102 063 833
- CN-A- 106 373 176
- CN-A- 109 710 704
- CN-A- 110 610 535
- US-A1- 2006 174 209
- US-A1- 2014 047 366
- US-A1- 2020 097 564
- US-A1- 2020 342 552

## Description

### TECHNICAL FIELD

This application relates to the field of intelligent terminal technologies, and in particular, relates to a map display method and apparatus, and an electronic device.

### BACKGROUND

At present, an electronic map is widely used when people travel. For developers and users in various vertical fields, mainstream electronic map developers also develop their own electronic maps, for example, Baidu Maps, Gaode Maps, and Google Maps, to provide functions such as map presentation, location search, route planning, and navigation.

While mobile electronic devices are widely used, application scenarios of the electronic maps are continuously expanded, and user requirements for the electronic maps are more complex and refined. The electronic maps developed by the mainstream electronic map developers cannot meet the complex and refined user requirements.

US 2020/342552 A1 discloses a method and system for editing and representing property values for a digital map.

US 2014/047366 A1 discloses methods and systems for decluttering icons on a map graphically presented on a display.

US 2020/097564 A1 discloses methods and systems for generating digital maps that include information of interest specifically to the user viewing the digital map.

### SUMMARY

According to a first aspect, this application provides a map display method, including:
invoking a map instance object, where the map instance object includes one or more basic data layers; and
creating a user data layer

Adding the user data layer to the map instance object to generate map data for map display includes:
performing display conflict detection on the basic data layer and the user data layer to obtain a detection result, wherein a display conflict comprises at least one of content blocking and content repetition;
setting at least one conflict resolution strategy based on the detection result, where the conflict resolution strategy includes a layer content hiding strategy if a map instance object has a location that may not be moved and a layer content avoidance strategy if a map instance has a location that may be moved, wherein the layer content hiding strategy comprises not displaying the map instance object and layer content avoidance strategy comprises hiding the map instance object; and
configuring the basic data layer and/or the user data layer based on the conflict resolution strategy.

In some embodiments, the user data layer is a layer created based on user map data, and adding the user data layer to the map instance object to generate map data for map display further includes: configuring the user data layer based on a customized style.

In a feasible implementation of the first aspect, the customized style is generated by a style editor, and a process of generating the customized style includes:
selecting a type of a layer, where the type of the layer includes a point layer, a line layer, and/or a plane layer; and
customizing a style of the layer, including setting an icon used by the layer, a font of layer content, and a form of the layer content.

In a feasible implementation of the first aspect, the adding the user data layer to the map instance object to generate map data for map display further includes:
configuring the user data layer and/or the basic data layer based on a content display strategy, where the content display strategy includes a layer content hiding strategy and/or a layer content display density.

According to a second aspect, this application provides a map display apparatus, including:
a map invoking module, configured to invoke a map instance object, where the map instance object includes one or more basic data layers;
a layer creation module, configured to create a user layer; and
a map generation module, configured to add the user data layer to the map instance object to generate map data for map display, where the map generation module includes:
   a conflict detection unit, configured to perform conflict detection on the basic data layer and the user data layer to obtain a detection result, where the detection result is used to describe a display conflict between the user data layer and the basic data layer, wherein a display conflict comprises at least one of content blocking and content repetition;
   a conflict resolution strategy obtaining unit, configured to set at least one conflict resolution strategy for the basic data layer and/or the user data layer based on the detection result, where the conflict resolution strategy includes a layer content hiding strategy if a map instance object has a location that may not be moved and/or a layer content avoidance strategy if a map instance has a location that may be moved, wherein the layer content hiding strategy comprises being configured not display the map instance object and layer content avoidance strategy comprises being configured to hide the map instance object; and
   a layer configuration unit, configured to configure the basic data layer and/or the user data layer based on the conflict resolution strategy.

According to a feasible implementation, this application provides an electronic device. The electronic device includes a memory configured to store computer program instructions and a processor configured to execute the program instructions, and when the computer program instructions are executed by the processor, the electronic device is triggered to perform the steps of the method according to the first aspect.

According to a fourth aspect, this application provides a computer-readable storage medium. The computer-readable storage medium stores a computer program, and when the computer program runs on a computer, the computer is enabled to perform the method in embodiments of this application.

According to a further aspect, this application provides a computer program product. The computer program product comprises instructions which, when the program is executed by a computer, cause the computer to carry out the steps of the method in embodiments of this application.

### BRIEF DESCRIPTION OF DRAWINGS

FIG. 1 is a flowchart of customizing a style of a map according to an embodiment of this application;
FIG. 2 is a schematic diagram of a presentation effect of a customized style of a map according to an embodiment of this application;
FIG. 3 is a schematic flowchart of map display according to an embodiment of this application;
FIG. 4 is a schematic diagram of a presentation effect of an electronic map according to an embodiment of this application;
FIG. 5 is a system architecture of an electronic map display system according to an embodiment of this application;
FIG. 6 is a performing procedure of a map display method according to an embodiment of this application;
FIG. 7 is a performing procedure of generating a customized style by using a style editor according to an embodiment of this application;
FIG. 8 is a schematic diagram of an icon configuration according to an embodiment of this application;
FIG. 9 is a schematic diagram of form configuration of layer content according to an embodiment of this application;
FIG. 10 is a schematic diagram of display density configuration of a map content object according to an embodiment of this application;
FIG. 11 is a procedure of configuring a conflict resolution strategy according to an embodiment of this application;
FIG. 12 is a schematic diagram of a map content object conflict according to an embodiment of this application;
FIG. 13 is a schematic diagram of performing collision calculation on a map content object according to an embodiment of this application;
FIG. 14 is a schematic diagram of performing an avoidance strategy on text content according to an embodiment of this application;
FIG. 15 is a schematic flowchart of layer rendering based on conflict detection according to an embodiment of this application; and
FIG. 16 is a flowchart of map display according to an embodiment of this application.

### DESCRIPTION OF EMBODIMENTS

To make the objectives, technical solutions, and advantages of this application clearer, the following clearly and completely describes the technical solutions in this application with reference to specific embodiments and accompanying drawings in this application. It is clear that the described embodiments are merely some but not all of embodiments of this application. All other embodiments obtained by a person of ordinary skill in the art based on embodiments of this application without creative efforts shall fall within the protection scope of this application.

Terms used in embodiments of this application are only used to explain specific embodiments of this application, but are not intended to limit this application.

Generally, a user requirement for an electronic map includes a visual requirement, that is, a user expects that a presentation effect of the electronic map meets a visual requirement of the user. For example, the user expects that green space in the map is marked in dark green (the user does not like light green set by default). For another example, the user expects that the map is displayed in black and white. For another example, the user expects that texts in the map are displayed in a large font.

For the visual requirement of the user, a feasible solution is to adjust the presentation effect of the electronic map based on the user requirement (visual requirement) of the user. Specifically, the presentation effect of the map includes two parts, namely, content and a style. Content is an abstract expression of a real physical world, for example, a building or a river. The content includes three forms, namely, point, line, and plane. The style is a decoration of the content, and facilitates understanding of the user, like a color and a width of a road, a fill color of the river, and settings of a font.

In a feasible map display solution, a developer/user is allowed to customize a style of the electronic map. Specifically, a style editor for the electronic map is provided. The developer/user may edit the style of the map by using the style editor. The developer or user enters the style editor to edit the style of the map. After the style of the map is edited, a style setting interface is invoked in a software development kit (Software Development Kit, SDK) in an Android (Android) system or an iOS (iOS) system or a JavaScript (JS) application programming interface (Application Programming Interface, API), to achieve an effect of a customized map.

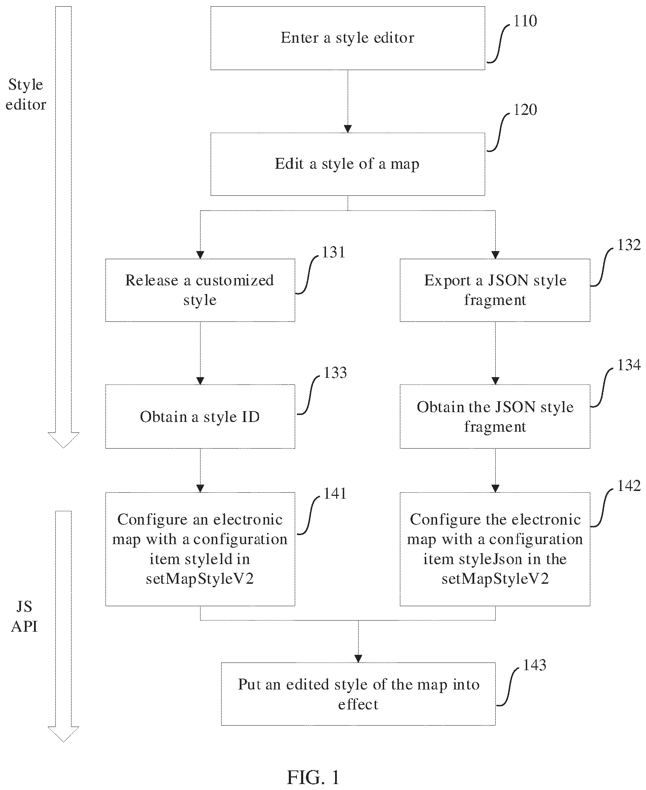

FIG. 1 is a flowchart of customizing a style of a map according to an embodiment of this application. As shown in FIG. 1, a developer/user enters a style editor (step 110) to edit the style of the map (step 120), to obtain a customized style.

After the style of the map is edited, the style editor directly exports the customized style to a map display system, to configure an electronic map.

Alternatively, after the style of the map is edited, the style editor releases the customized style (step 131). For example, the style editor saves the customized style to a style library, and releases a style number (ID) of the style of the map in the style library.

Alternatively, after the style of the map is edited, the style editor also exports the customized style as a JavaScript object notation (JavaScript Object Notation, JSON) style fragment (step 132).

When the electronic map that is configured with the edited customized style needs to be used, a style ID of the customized style may be obtained (step 133), the corresponding customized style may be invoked from the style library based on the style ID, and the style of the map may be configured through the JavaScript (JavaScript, JS) API. For example, the electronic map is configured with a configuration item styleld in setMapStyleV2 (step 141), and finally the edited style of the map is put into effect (step 143).

Alternatively, the JSON style fragment of the customized style may be obtained (step 134), and the style of the map may be configured through the JavaScript (JavaScript, JS)API based on the JSON style fragment. For example, the electronic map is configured with a configuration item styleJson in the setMapStyleV2 (step 142), and finally the edited style of the map is put into effect (step 143).

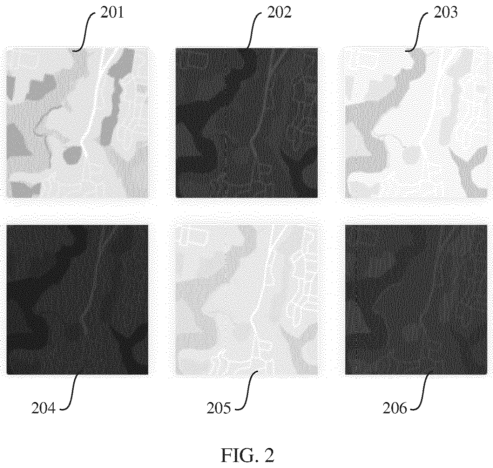

FIG. 2 is a schematic diagram of a presentation effect of a customized style of a map according to an embodiment of this application. As shown in FIG. 2, different customized styles (for example, six different styles 201 to 206 of the map shown in FIG. 2) are configured for same map content, so that different visual effects may be presented.

Further, a user requirement for an electronic map further includes a content requirement, that is, a user expects the electronic map to provide map content required by the user. For example, the user expects to know names of stores and companies in a building on the map. However, in an actual application scenario, when developing an electronic map, an electronic map developer cannot predict all user content requirements. Therefore, the electronic map provided by the electronic map developer does not include the map content required by the user. For example, the electronic map provided by the electronic map developer displays only a building, a street, and a building name, but does not include the names of the stores or companies in the building.

For the content requirement of the user, a feasible application solution is to obtain, based on the content requirement of the user, user map data that meets the content requirement (for example, the names of the stores and companies in the building), and write the user map data into data of the electronic map, so that the electronic map can present the user map data.

Specifically, the map content of the electronic map takes layers as a basic organization unit, generally including basic data layers such as a water system, green space, a road, a building, and a point of interest (Point of Interest, POI). A plurality of layers form an intact electronic map. A user data layer is created based on the user map data. The user data layer is overlapped on the basic data layer to enable the electronic map to present the user map data.

Further, in an actual application scenario, due to a reason such like data obtaining difficulty or cost control, the electronic map developer cannot obtain corresponding user map data based on all user content requirements. Therefore, in a feasible solution, a third-party developer/user is allowed to collect the user map data by itself.

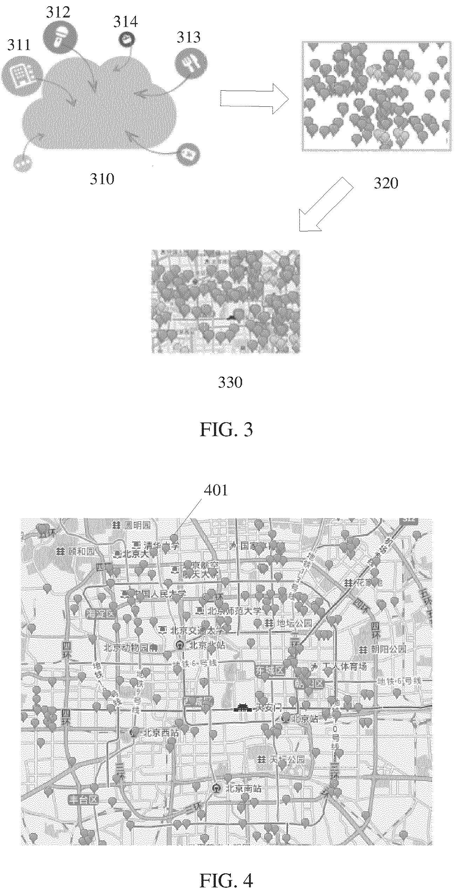

Specifically, FIG. 3 is a schematic flowchart of map display according to an embodiment of this application. A user collects corresponding user map data based on content requirement of the user. Alternatively, a third-party developer collects the corresponding user map data based on the content requirement of the user. Then, the user map data is uploaded. For example, the data is uploaded through an HTTP interface or in a visualized marking manner. As shown in 310 in FIG. 3, locations and names of POIs such as a hotel 311, a karaoke room 312, a restaurant 313, and a store 314 are uploaded.

When a map is displayed, first, a map rendering engine automatically renders the user map data based on a preset rendering rule, to obtain a user data layer, for example, a user data layer that is shown in 320 and is obtained through rendering.

When an electronic map is presented, the user data layer is overlapped on a basic data layer. For example, when a presentation effect of the electronic map shown in 330 is presented.

FIG. 4 is a schematic diagram of a presentation effect of an electronic map according to an embodiment of this application. In FIG. 4, map content represented by a balloon label (for example, 401) is a user data layer created based on user map data.

The user map data may be presented by using the user data layer, to meet a content requirement of a user. However, in an actual application scenario, because the user data layer is created based on user map data uploaded by the user or a third-party developer, a presentation style of the user data layer and a presentation style of a basic data layer created by an electronic map developer are difficultly unified. In addition, because the user data layer is attached to the basic data layer, the user data layer is an independent layer in comparison with an original electronic map. Therefore, a style editor of the electronic map cannot be used. As a result, a presentation effect of the user data layer cannot meet a visual requirement of the user.

For a problem that the presentation effect of the user data layer cannot meet the visual requirement of the user, in this embodiment of this application, a style editor that supports style definition of a layer level is established. As an independent layer, the user data layer may also reference a style ID released by the style editor or a JSON style fragment exported by the style editor, to implement style customization.

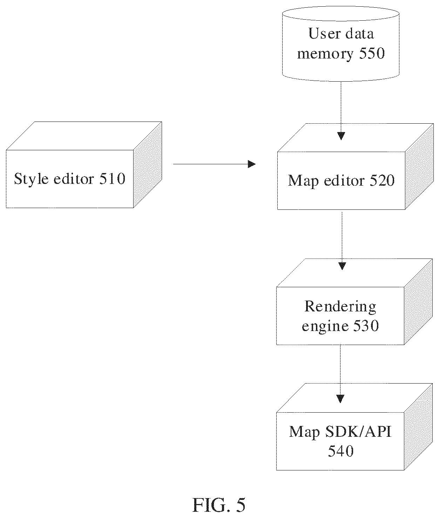

FIG. 5 is a system architecture of an electronic map display system according to an embodiment of this application. As shown in FIG. 5, the system architecture of the electronic map display system includes:
a style editor 510, configured to provide a style customization capability at a layer level;
a map editor 520, configured to manage map content, where the map editor 520 supports adding a user data layer;
a rendering engine 530, configured to render a map layer (a basic data layer and a user data layer), where the rendering engine 530 encapsulates all logic drawn on a map;
a map SDK/API 540, configured to provide a map capability development package to the exterior, where the map SDK/API 540 includes various interface services; and
a user data memory 550, configured to record all user data content in a unified manner.

The electronic map display system shown in FIG. 5 may be implemented in a local device (for example, a mobile phone), or may be implemented in a remote device (for example, a cloud server), or may be partially implemented in a local device (for example, the style editor 510, the map editor 520, and the map SDK/API 540 are implemented in a mobile phone) and partially implemented in a remote device (for example, the user data memory 550 is implemented in a cloud server, and the user data memory 550 provides an interface for uploading and maintaining user data through a location based service (Location Based Service, LBS) cloud).

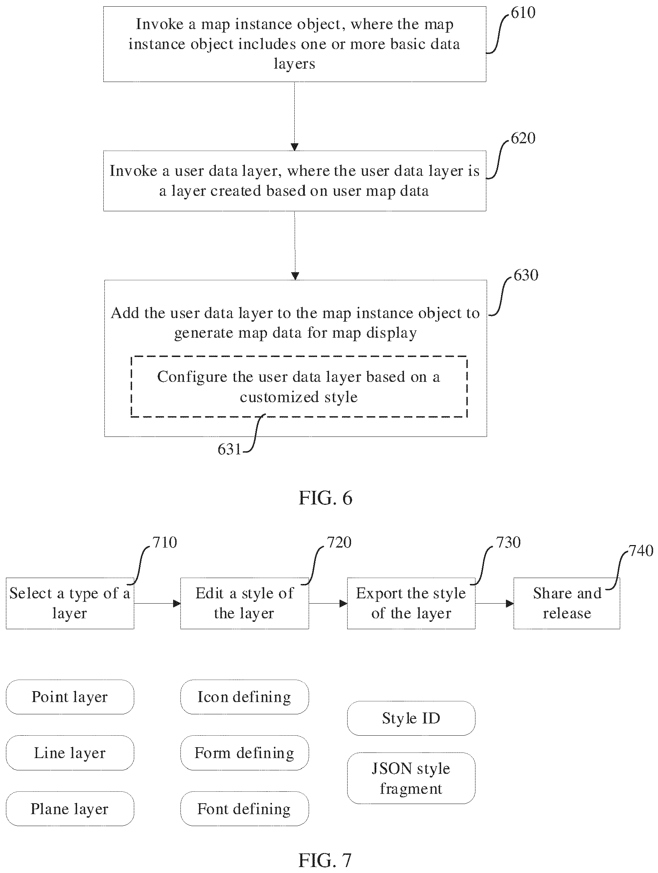

FIG. 6 is a performing procedure of a map display method according to an embodiment of this application. The electronic map display system shown in FIG. 5 executes the following procedure shown in FIG. 6, to output map data for map display.

Step 610: Invoke a map instance object, where the map instance object includes one or more basic data layers.

Step 620: Invoke a user data layer, where the user data layer is a layer created based on user map data.

Step 630: Add the user data layer to the map instance object to generate map data for map display.

In a process of preforming step 630, step 631 is performed, that is, configure the user data layer based on a customized style.

According to the method of the embodiment shown in FIG. 6, personalized content may be added to the electronic map by overlapping the user data layer, or a style of personalized content may be customized by performing style configuration on the user data layer, to greatly improve a personalized capability of the map and release creativity potential of a user to the maximum extent.

Further, in step 610, the map instance object may be a created map instance object, or may be a map instance object created in real time by the electronic map display system by invoking a map SDK/API.

In step 620, the user data layer may be a created layer, or may be a layer created in real time by the electronic map display system by invoking the user map data.

In an implementation of step 630, that add the user data layer to the map instance object includes: overlapping the user data layer on the basic data layer of the map instance object. Specifically, the user data layer may be first configured based on the customized style, and then the configured user data layer is added to the map instance object. Alternatively, the user data layer may be first added to the map instance object, and then the user data layer is configured.

According to the method in the embodiment shown in FIG. 6, the user data layer may be added to the map instance object including the basic data layer, and the user data layer may be configured based on the customized style, so that a presentation effect of the electronic map meets a visual requirement of the user while presentation content of the electronic map meets a content requirement of the user. According to the method in the embodiment shown in FIG. 6, user experience in display of the electronic map may be greatly improved.

Further, in step 630, the customized style is generated by a style editor. When the electronic map needs to be displayed, the user may temporarily generate, by using the style editor in a current application scenario, the customized style used to configure the user data layer; or may invoke a customized style that has been created previously, for example, invoke a corresponding customized style from a style library based on a style ID released by the style editor; or may invoke a JSON style fragment exported by the style editor based on the customized style.

Further, in an actual application scenario, a map layer includes different types of the layer, for example, a point layer (for example, the layer includes point-shaped charging pile information), a line layer (for example, the layer includes linear road direction information), and a plane layer (for example, the layer includes a planar water area shape).

Specifically, FIG. 7 is a performing procedure of generating a customized style by using a style editor according to an embodiment of this application. In this embodiment of this application, the following steps shown in FIG. 7 are performed to generate the customized style.

Step 710: Select a type of a layer, that is, select the type (for example, a point layer, a line layer, or a plane layer) of the layer based on content of the layer. For example, if the layer includes point-shaped charging pile information, the point layer is selected.

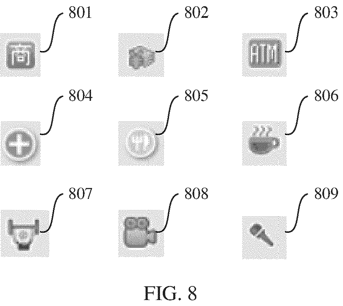

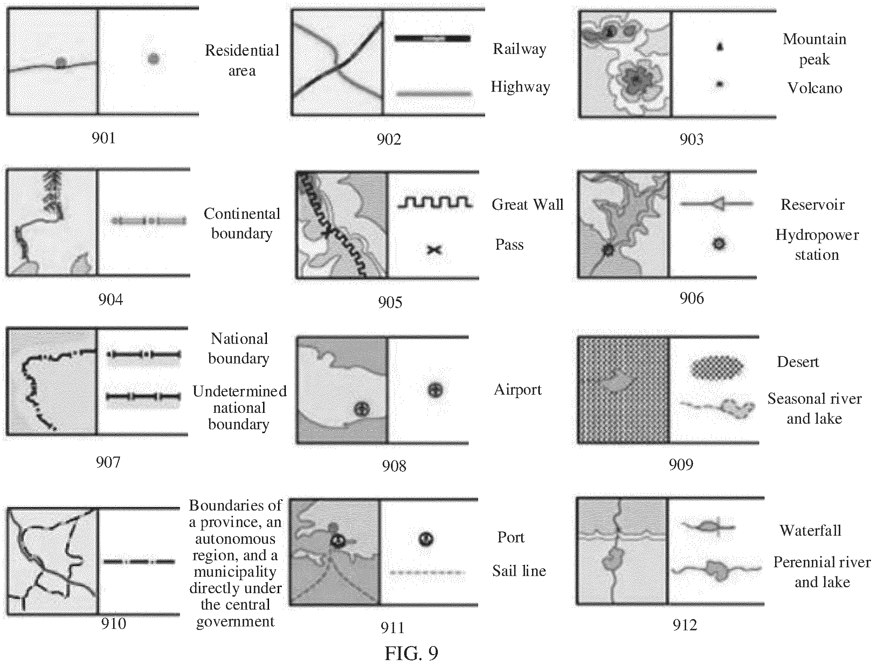

Step 720: Edit a style of the layer, and customize the style of the layer to symbolize map content, including: icon defining: setting an icon used by the layer (for example, selecting icons shown in FIG. 8 to configure a shopping mall 801, a bank 802, an ATM 803, a medical institution 804, a restaurant 805, a coffee shop 806, a physical fitness venue 807, a theater 808, and a KTV 809); font defining: setting a font of the content of the layer; and form defining: setting a form of the content of the layer (for example, selecting forms (901 to 912) shown in FIG. 9 to configure presentation forms of the map content, for example, a railway line (902) and a national boundary (907)).

After step 720 is completed, edition of the customized style is completed, and the customized style may be used to configure a map layer.

To facilitate using the customized map style of the map by a user, the following step is further performed.

Step 730: Export the style of the layer, and export the edited customized style as the style ID or the JSON style fragment for future use.

Further, the following step is further performed.

Step 740: Share and publish, that is, share and publish the style ID or the JSON style fragment for others to use the customized style.

Further, to implement step 631, in an embodiment of this application, the rendering engine 530 (rendering API/SDK) of the electronic map display system supports customization of the style of the user data layer.

Further, in the electronic map, the layer is used to display the map data. However, in an actual application scenario, not all map data is expected to be viewed by the user. Therefore, in an embodiment of this application, the process of performing step 630, the user data layer and/or the basic data layer are/is further configured based on a content display strategy.

Specifically, the content display strategy includes a layer content hiding strategy, and the user may configure, by setting the layer content hiding strategy, data that is not displayed on the map layer in the map data. For example, the user map data includes names of a store, a company, and an entertainment venue in a building. In an application scenario, when the user browses the electronic map for shopping and consumption, the user does not need to know an office in the building. Therefore, the layer content hiding strategy of the user data layer set by the user is to hide the name of the company. For another example, a basic data layer for a road includes a common road, an expressway, a railway, and a bicycle-dedicated road. In an application scenario, when the user browses the electronic map for a self-driving tour, the user does not need to know a road on which a private vehicle cannot run. Therefore, the layer content hiding strategy of the user data layer set by the user is to hide the railway and the bicycle-dedicated road.

Further, the content display strategy further includes a layer content display density. The user may configure display densities of one or more types of display objects (for example, POIs) in the electronic map by setting the layer content display density. In an embodiment, specific logic of adjusting the display density is as follows.

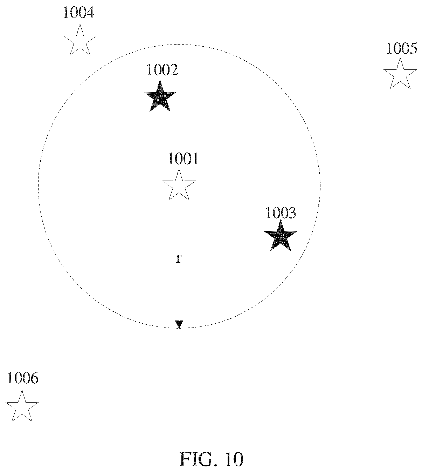

All objects (for example, pentagrams 1001 to 1006 shown in FIG. 10) are traversed at the layer. Specifically, if an object has a rank (rank) attribute (which refers to ranking information of the object), traversing is performed after rank values are sorting.

For each layer object (for example, the pentagram 1001 shown in FIG. 10), other objects (for example, the pentagrams 1002 and 1003 shown in FIG. 10) appearing in a range of a specific radius (controlled by the display density, for example, a radius r of a circular area shown in FIG. 10) are calculated, and the other objects are marked.

During layer rendering, all unmarked layer objects are reserved and displayed, and marked objects are not displayed (for example, the pentagrams 1001, 1004, 1005, and 1006 are reserved and displayed, and the pentagrams 1002 and 1003 are not displayed).

Further, the layer content display density may be configured for an object of a single layer. Alternatively, the layer content display density may be uniformly configured for a plurality of types of objects of a single layer. Alternatively, the layer content display density may be uniformly configured for a plurality of types of objects of a plurality of layers, for example, the layer content display density may be configured for all types of POIs of all basic data layers and user data layers.

Further, to implement step 631, in an embodiment of this application, the rendering engine 530 (rendering API/SDK) of the electronic map display system supports adjustment of the display density, and the adjustment of the display density is conducted in the rendering engine 530.

Further, in an actual application scenario, the plurality of basic data layers in the map instance object invoked in the step 610 are displayed in an overlapping manner, and the user data layer is overlapped on the basic data layer. Therefore, when the map content is displayed on the layer, display conflicts may occur between the plurality of basic data layers and may occur between the user data layer and the basic data layer. For example, map content of an upper layer blocks map content of a lower layer. In addition, in the single layer, a display conflict may also occur in displayed map content, for example, a plurality of icons at a same layer are stacked. As a result, content finally presented on the electronic map may be missing, and content displayed on the electronic map is disordered, consequently affecting the presentation effect.

For the foregoing problem, in an implementation of step 630, display conflict detection is performed on all layers (the basic data layer and the user data layer), to determine whether there is a display conflict; a conflict resolution strategy is set based on a conflict detection result; and a layer with the display conflict is configured based on the conflict resolution strategy, to resolve the display conflict and improve the presentation effect of the electronic map.

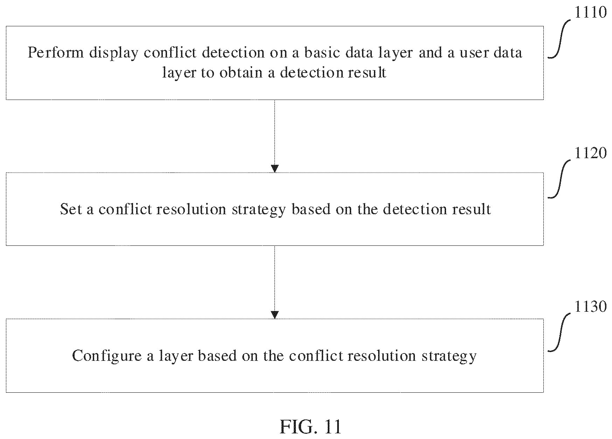

FIG. 11 is a procedure of configuring a conflict resolution strategy according to an embodiment of this application. In an implementation of step 630, the following procedures shown in FIG. 11 are performed to resolve a display conflict between layers.

Step 1110: Perform display conflict detection on a basic data layer and a user data layer to obtain a detection result.

Step 1120: Set a conflict resolution strategy based on the detection result.

Step 1130: Configure a layer based on the conflict resolution strategy.

Specifically, the display conflict detection includes display conflict detection in a single layer and/or display conflict detection between a plurality of layers. For example, in an implementation of step 1110, display conflict detection is performed for all layers.

Specifically, in an actual application scenario, when there is a display conflict between two layers, display content of one layer may be adjusted to resolve the display conflict. Alternatively, display content of two layers may be adjusted to resolve the display conflict. Therefore, in step 920, the conflict resolution strategy may aim at one layer, or may aim at a plurality of layers. The conflict resolution strategy may aim at the basic data layer and/or the user data layer. Correspondingly, in step 1130, a configuration object of the conflict resolution strategy may also be the basic data layer and/or the user data layer.

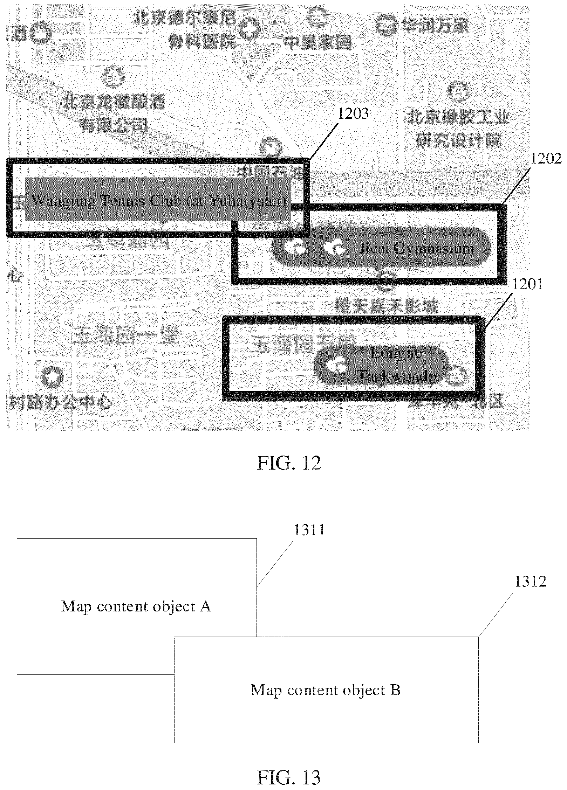

Further, in an actual application scenario, the display conflict between layers includes content blocking. For example, as shown in FIG. 12, the user data layer is used to present a merchant mark (POI), for example, a merchant mark "Longjie Taekwondo" in a marking box 1201, a merchant mark "Jicai Gymnasium" in a marking box 1202, and a merchant mark "Wangjing Tennis Club (at Yuhaiyuan)" in a marking box 1203.

In FIG. 12, the merchant mark (POI) "Longjie Taekwondo" in the marking box 1201 in the user data layer blocks a name "Yuhaiyuan Wuli" of a community in the basic data layer below. As a result, the name "Yuhaiyuan Wuli" of the community cannot be completely presented, and the user may not correctly identify the name "Yuhaiyuan Wuli" of the community.

The merchant mark "Wangjing Tennis Club (at Yuhaiyuan)" in the marking box 1203 in the user data layer blocks a name "Yuquan Road" of a road in the basic data layer below. As a result, the name "Yuquan Road" of the road cannot be completely presented, and the user may not correctly identify the name "Yuquan Road" of the road.

The merchant mark "Jicai Gymnasium" in the marking box 1202 in the user data layer completely overlaps a merchant mark in the user data layer below. As a result, the merchant mark in the lower part cannot be completely presented, and the user may not identify the merchant mark in the lower part.

For content blocking, in an embodiment of this application, conflict detection is performed based on collision calculation. Specifically, for a map content object (for example, text annotation content, an icon, or a point-shaped object) that may be blocked in each layer, collision calculation is performed based on a minimum outer rectangle of the object, to determine whether there is content blocking between the map content objects. As shown in FIG. 13, a minimum outer rectangle of a map content object A is a rectangle 1311, and a minimum outer rectangle of a map content object B is a rectangle 1312. There is a collision between the rectangle 1311 and the rectangle 1312. Therefore, there is content blocking between the map content objectA and the map content object B.

In an actual application scenario, display locations of some map content objects may be moved (for example, the text annotation content). When a map content object of which location may be moved is blocked, the map content object may be prevented from being blocked by moving the location. Therefore, in an embodiment of this application, the conflict resolution strategy includes a layer content avoidance strategy for the map content object of which location may be moved. In the layer content avoidance strategy, a problem that the map content object is blocked is resolved by an avoidance layout.

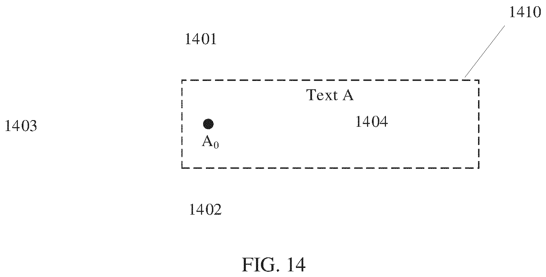

Specifically, a text object is used as an example. As shown in FIG. 14, a minimum outer rectangle of a text A is a rectangle 1400. When the text A is blocked or blocked by another map content object, if a text center point A₀ (a center point (Center (x, y)) of the minimum outer rectangle of the text A) is used as a reference, and the text may be moved in four directions, namely, a location 1401 (text (up)), a location 1402 (text (down)), a location 1403 (text (left)), and a location 1404 (text (right)). For example, if the text is moved to the location 1404 (text (right)), a minimum outer rectangle of a final text is the rectangle 1410, and coordinates of four vertices of the rectangle 1410 are (minX, minY), (maxX, minY), (minX, maxY), and (maxX, maxY). Specifically, in an application scenario, the text may be moved to the location 1404 (text (right)) by default. If the right side is blocked, the text may be moved to the left side (1403)/up side (1401)/down side (1402).

Further, in an actual application scenario, the display locations of the some map content objects (for example, an icon representing a building at a fixed location) cannot be moved. Therefore, in an embodiment of this application, the conflict resolution strategy further includes a layer content hiding strategy for a map content object of which location may not be moved. In the layer content hiding strategy, by not displaying a blocked map content object, a problem that a disordered presentation effect is caused by a fact that the map content object is partially is resolved, and display memory consumption is reduced.

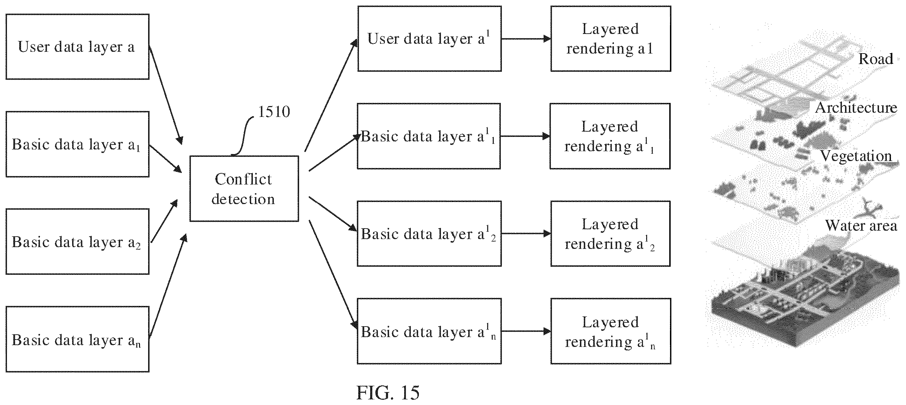

FIG. 15 is a schematic flowchart of layer rendering based on conflict detection according to this embodiment of this application. As shown in FIG. 15, conflict detection is performed (step 1510) on all map content objects of which content may be blocked in each layer (a user data layer a, a basic data layer a₁, a basic data layer a₂, ..., and a basic data layer aₙ) in an electronic map A. In step 1510, collision calculation is performed to determine the map content object of which content is blocked.

For a map content object (for example, a text) of which content is blocked and that is movable, an avoidance layout (for example, a text is moved to a right side by default, and if the right side is blocked, the text is placed on a left/up/down side). For a blocked map content object that is not movable (for example, an icon of a building), the map content object is marked. Finally, a user data layer a¹, a basic data layer a¹₁, a basic data layer a¹₂, ..., and a basic data layer a¹ₙare generated.

Layered rendering (layered rendering a¹, layered rendering a¹₁, layered rendering a¹₂, ..., and layered rendering a¹ₙ) is performed on the user data layer a¹, the basic data layer a¹₁, the basic data layer a¹₂, ..., and the basic data layer a¹ₙ. During layered rendering, a marked map object is not displayed, and other map objects are normally displayed.

Further, in an actual application scenario, a display conflict between layers further includes content repetition. For example, as shown in FIG. 12, the merchant mark "Jicai Gymnasium" in the marking box 1202 in the user data layer repeats with a name "Jicai Gymnasium" of a building in the basic data layer below. As a result, there is redundant content on map content displayed on the electronic map, and the presentation effect of the electronic map is disordered. This greatly affects visual experience of the user.

For content repetition, in an embodiment of this application, conflict detection is performed based on content identification. Specifically, content identification is performed on text content (for example, text annotation content, and an icon/picture including a text) in all layers, and identification results of different text content are compared to determine whether content of the map content objects is repeated. For the content repetition, the conflict resolution strategy includes: hiding a party of which content is repeated (for example, hiding the map content object of the user data layer by default). For example, the merchant mark "Jicai Gymnasium" in the marking box 1202 in the user data layer is hidden.

Specifically, as shown in FIG. 15, in step 1510, content identification and content comparison are performed for text content of all the layers (the user data layer a, the basic data layer a₁, the basic data layer a₂, ..., and the basic data layer aₙ) in the electronic map, to determine that there is a map content object of which content is repeated. For the map content object of which content is repeated, the map content object of which content is repeated and that is of the user data layer is marked. During layered rendering (layered rendering a¹, layered rendering a¹₁, layered rendering a¹₂, ..., and layered rendering a¹ₙ), the marked map content object is not displayed, and the other map content objects are normally displayed.

According to the method in the embodiment shown in FIG. 15, the basic data layer and the user data layer participate in conflict detection together, and then are rendered and output layer by layer. This effectively resolves a cross-layer content conflict problem, and ensures that browsing experience of the entire electronic map is not affected when the user data layer is added.

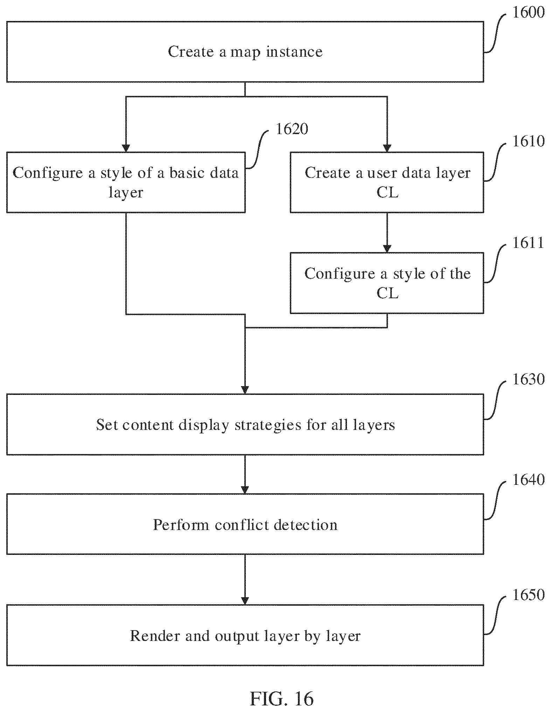

FIG. 16 is a flowchart of map display according to an embodiment of this application. An electronic map display system performs the following steps shown in FIG. 16 to display an electronic map.

Step 1600: Create a map instance object, for example, create the map instance object by invoking a map SDK/API. For example, the following code fields are used:$var Hmap = new mapsdk . Map \left(document.getElementById\left("Huaweimap"\right), mapOptions\right) .$

Step 1610: Create a user data layer (CustomLayer, CL), and add the user data layer to the map instance object.

Step 1611: Configure a style of the CL based on a customized style, where the customized style is generated by a style editor.

For example, the following code is set for a rendering API/SDK:$var Hmap = new mapsdk . Map \left(document.getElementById\left("Huaweimap"\right), mapOptions\right) ;$
var customLayer = new mapsdk.CustomLayer (...);

Hmap.addTileLayer(customLayer);

```
         customLayer.setStyle({
                styleID: 'xxxx'
         });
```

In the foregoing code, the customized style of which style ID is xxxx is used to configure the user data layer (CustomLayer).

Step 1620: Configure a style of a basic data layer (or use a default style without configuring).

Step 1630: Set content display strategies for all layers, that is, set a corresponding content display strategy for each layer (the basic data layer and the user data layer) as required, for example, a layer content hiding strategy (setting some POI categories not to be displayed), and/or a layer content display density (adjusting a content display density of a layer). For example, the following code is set for the rendering API/SDK:
customLayer.setDensity (0.6).

In the foregoing code, a display density of the user data layer (CustomLayer) is set to 0.6.

Step 1640: Perform conflict detection. A rendering engine needs to perform conflict detection on all data layers, to ensure that readability of content between the layers is not affected because of blocking (for example, a text on a road and a POI text do not overlap, and icons of POIs do not overlap), and ensure that when the content between the layers is repeated, a presentation effect is not affected (for example, the text on the road and the POI text do not overlap).

Step 1650: Render and output layer by layer. The rendering engine renders and outputs layer by layer, to generate finally required map data (the map data is output to a display module for display).

It may be understood that some or all of the steps or operations in the foregoing embodiments are merely examples. Other operations or variations of various operations may be performed in embodiments of this application. In addition, the steps may be performed in a sequence different from that presented in the foregoing embodiments, and not all operations in the foregoing embodiments may need to be performed.

Further, in the 1990s, an improvement in a technology may be clearly distinguished as a hardware improvement (for example, an improvement in a circuit structure like a diode, a transistor, or a switch) or a software improvement (an improvement in a method process). However, with development of technologies, improvements in a plurality of method processes today can be considered as direct improvements in hardware circuit structures. Design personnel almost all obtain a corresponding hardware circuit structure by programming an improved method process to a hardware circuit. Therefore, it cannot be said that an improvement in a method process cannot be implemented by a hardware entity module. For example, a programmable logic device (Programmable Logic Device, PLD) (for example, a field programmable gate array (Field Programmable Gate Array, FPGA)) is such an integrated circuit, and a logic function of the programmable logic device is determined by an accessing party by programming the device. The design personnel program to "integrate" a digital apparatus into one PLD without a need for a chip manufacturer to design and manufacture an application-specific integrated circuit chip. In addition, today, instead of manually making an integrated circuit chip, such programming is also mostly implemented by using "logic compiler (logic compiler)" software. The "logic compiler" software is similar to a software compiler used during program development and writing, and original code to be compiled is also written in a specific programming language that is referred to as a hardware description language (Hardware Description Language, HDL). The HDL does not have merely one type, but has a plurality of types, such as an ABEL (Advanced Boolean Expression Language), an AHDL (Altera Hardware Description Language), Confluence, a CUPL (Cornell University Programming Language), HDCal, a JHDL (Java Hardware Description Language), Lava, Lola, MyHDL, PALASM, and an RHDL (Ruby Hardware Description Language). Currently, a VHDL (Very-High-Speed Integrated Circuit Hardware Description Language) and Verilog are most commonly used currently. A person skilled in the art should also be aware that, a hardware circuit that implements a logic method process can be easily obtained provided that logic programming is slightly performed on the method process by using the foregoing several hardware description languages and the method process is programmed into an integrated circuit.

A controller may be implemented in any appropriate manner. For example, the controller may take the form of, for example, a microprocessor or a processor, and a computer-readable medium, a logic gate, a switch, an application-specific integrated circuit (Application-Specific Integrated Circuit, ASIC), a programmable logic controller, and an embedded microcontroller that stores computer-readable program code (like software or firmware) that can be executed by the (micro) processor. Examples of the controller include but are not limited to the following microcontrollers: ARC 625D, Atmel AT91SAM, Microchip PIC18F26K20, and Silicone Labs C8051F320. A memory controller may also be implemented as a part of a control logic of a memory. A person skilled in the art also knows that, in addition to implementing the controller in a pure computer-readable program code manner, the controller may implement the same function by form of a logic gate, a switch, an application-specific integrated circuit, a programmable logic controller, an embedded microcontroller, and the like by performing logic programming on the method steps. Therefore, the controller may be considered as a hardware component, and an apparatus that is included in the controller and that is configured to implement various functions may also be considered as a structure in the hardware component. Alternatively, an apparatus configured to implement various functions may be considered as both a software module for implementing a method and a structure in a hardware component.

Therefore, based on the map display method provided in an embodiment of this application, an embodiment of this application further provides a map display apparatus. The map display apparatus is installed in a local terminal (for example, a mobile phone) that may display an electronic map or a server (for example, a cloud map server) that may provide an electronic map service for a user terminal. The map display apparatus includes:
a customized style obtaining module, configured to obtain a customized style;
a map invoking module, configured to invoke a map instance object, where the map instance object includes one or more basic data layers;
a layer creation module, configured to create a user layer; and
a map generation module, configured to add the user data layer to the map instance object to generate map data for map display, where the map generation module includes:
   a layer configuration unit, configured to configure the user data layer based on the customized style.

Based on the map display method provided in an embodiment of this application, an embodiment of this application further provides a map display apparatus. The map display apparatus is installed in a local terminal (for example, a mobile phone) that may display an electronic map or a server (for example, a cloud map server) that may provide an electronic map service for a user terminal. The map display apparatus includes:
a map invoking module, configured to invoke a map instance object, where the map instance object includes one or more basic data layers; and
a layer creation module, configured to create a user layer;
a map generation module, configured to add the user data layer to the map instance object to generate map data for map display, where the map generation module includes:
   a conflict detection unit, configured to perform conflict detection on the basic data layer and the user data layer to obtain a detection result, where the detection result is used to describe a display conflict between the user data layer and the basic data layer;
   a conflict resolution strategy obtaining unit, configured to set a conflict resolution strategy for the basic data layer and/or the user data layer based on the detection result, where the conflict resolution strategy includes a layer content hiding strategy and/or a layer content avoidance strategy; and
   a layer configuration unit, configured to configure the basic data layer and/or the user data layer based on the conflict resolution strategy.

In the description of embodiments of this application, for ease of description, the apparatus is described by dividing functions into various modules/units. Division into the modules/units is merely logical function division. During implementation of embodiments of this application, the functions of the modules/units may be implemented in a same piece of or a plurality of pieces of software and/or hardware.

Specifically, in an actual implementation, all or some of the apparatuses provided in embodiments of this application may be integrated into one physical entity, or may be physically separated. In addition, all of the modules may be implemented by form of software invoked by a processing element, or may be implemented by form of hardware. Alternatively, some modules may be implemented by form of software invoked by a processing element, and some modules are implemented by form of hardware. For example, a detection module may be a separately disposed processing element, or may be integrated into a chip of an electronic device for implementation. Implementation of other modules is similar to the implementation of the detection module. In addition, all or some of the modules may be integrated together, or may be implemented independently. In an implementation process, steps in the foregoing methods or the foregoing modules can be implemented by using a hardware integrated logical circuit in the processing element, or by using instructions by form of software.

For example, the foregoing modules may be configured as one or more integrated circuits for implementing the foregoing method, for example, one or more application-specific integrated circuits (Application-Specific Integrated Circuits, ASICs), one or more digital signal processors (Digital Signal Processors, DSPs), or one or more field programmable gate arrays (Field Programmable Gate Arrays, FPGAs). For another example, these modules may be integrated together and implemented by form of a system-on-a-chip (System-On-a-Chip, SOC).

An embodiment of this application further provides an electronic device. The electronic device includes a memory configured to store computer program instructions and a processor configured to execute the program instructions, and when the computer program instructions are executed by the processor, the electronic device is triggered to perform the method steps described in embodiments of this application.

Specifically, in an embodiment of this application, one or more computer programs are stored in the memory, the one or more computer programs include instructions, and when the instructions are executed by the device, the device is enabled to perform the method steps in embodiments of this application.

Specifically, in an embodiment of this application, the processor of the electronic device may be a system-on-a-chip SOC, and the processor may include a central processing unit (Central Processing Unit, CPU), or may further include a processor of another type. Specifically, in an embodiment of this application, the processor of the electronic device may be a PWM control chip.

Specifically, in an embodiment of this application, the processor may include, for example, a CPU, a DSP, a microcontroller, or a digital signal processor, and may further include a GPU, an embedded neural-network processing unit (Neural-network Processing Unit, NPU), and an image signal processor (Image Signal Processor, ISP). The processor may further include a necessary hardware accelerator or a logic processing hardware circuit, for example, an ASIC, or one or more integrated circuits configured to control program execution of the technical solutions in this application. In addition, the processor may have a function of operating one or more software programs. The software program may be stored in a storage medium.

Specifically, in an embodiment of this application, the memory of the electronic device may be a read-only memory (read-only memory, ROM) or another type of static storage device that can store static information and instructions, or a random access memory (random access memory, RAM) or another type of dynamic storage device that can store information and instructions. The memory may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any computer-readable medium that can be used to carry or store expected program code by form of an instruction or a data structure and that can be accessed by a computer.

Specifically, in an embodiment of this application, the processor and the memory may be integrated into one processing apparatus, and more commonly, are components independent of each other. The processor is configured to execute program code stored in the memory to implement the method in embodiments of this application. During specific implementation, the memory may alternatively be integrated into the processor, or independent of the processor.

Further, the device, the apparatus, the module, or the unit described in embodiments of this application may be specifically implemented by a computer chip or entity, or implemented by a product with a specific function.

A person skilled in the art should understand that embodiments of this application may be provided as a method, an apparatus, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media that include computer-usable program code.

In embodiments of this application, when any of the functions is implemented by form of a software function unit and sold or used as an independent product, the functions may be stored in a computer-readable storage medium. Based on such an understanding, the technical solutions of this application essentially, or the part contributing to the prior art, or some of the technical solutions may be implemented by form of a software product. The software product is stored in a storage medium, and includes several instructions for instructing a computer device (which may be a personal computer, a server, a network device, or the like) to perform all or some of the steps of the methods described in embodiments of this application.

Specifically, an embodiment of this application further provides a computer-readable storage medium. The computer-readable storage medium stores a computer program, and when the computer program runs on a computer, the computer is enabled to perform the method provided in embodiments of this application.

An embodiment of this application further provides a computer program product. The computer program product includes a computer program, and when the computer program runs on a computer, the computer is enabled to perform the method provided in embodiments of this application.

Embodiments of this application are described with reference to the flowcharts and/or block diagrams of the method, the device (apparatus), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can guide the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

Moreover, it should be noted that, in embodiments of this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items and a similar expression thereof refer to any combination of these items, including a single item or any combination of plural items. For example, at least one item of a, b, or c may indicate a, b, c, a and b, a and c, b and c, or a, b, and c, where a, b, and c may be singular or plural.

In embodiments of this application, a term "include" or any other variant thereof is intended to cover a non-exclusive inclusion, so that a process, a method, an article, or a device that includes a series of elements not only includes those elements but also includes other elements that are not expressly listed, or further includes elements inherent to such a process, method, article, or device. An element preceded by "includes a ..." does not, without more constraints, preclude the existence of additional identical elements in the process, method, article, or device that includes the element.

This application can be described in the general context of executable computer instructions executed by a computer, for example, a program module. Generally, the program unit includes a routine, program, object, component, data structure, and the like for executing a particular task or implementing a particular abstract data type. This application may also be practiced in distributed computing environments in which tasks are performed by remote processing devices that are connected through a communication network. In the distributed computing environment, program modules may be located in both local and remote computer storage media including storage devices.

Embodiments in this application are all described in a progressive manner, for same or similar parts in embodiments, mutual reference may be made. Each embodiment focuses on what is different from other embodiments. Especially, an apparatus embodiment is basically similar to a method embodiment, and therefore is described briefly; and for related parts, reference may be made to partial descriptions in the method embodiment.

A person of ordinary skill in the art may be aware that units and algorithm steps described in embodiments of this application may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing apparatus and unit, reference may be made to a corresponding process in the foregoing method embodiments. Details are not described herein again.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A map display method, comprising:
invoking a map instance object, wherein the map instance object comprises one or more basic data layers;
creating a user data layer; and
adding the user data layer to the map instance object to generate map data for map display, comprising:
performing (1110) display conflict detection on the basic data layer and the user data layer to obtain a detection result, wherein a display conflict comprises at least one of content blocking and content repetition;
setting (1120) at least one conflict resolution strategy based on the detection result, wherein the conflict resolution strategy comprises a layer content hiding strategy if a map instance object has a location that may not be moved and a layer content avoidance strategy if a map instance has a location that may be moved, wherein the layer content hiding strategy comprises not displaying the map instance object and layer content avoidance strategy comprises moving the map instance object; and
configuring (1130) the basic data layer and/or the user data layer based on the conflict resolution strategy.

2. The method according to claim 1, wherein the user data layer is a layer created based on user map data, and wherein adding the user data layer to the map instance object to generate map data for map display further comprises: configuring the user data layer based on a customized style.

3. The method according to claim 2, wherein the customized style is generated by a style editor, and a process of generating the customized style comprises:
selecting a type of a layer, wherein the type of the layer comprises a point layer, a line layer, and/or a plane layer; and
customizing a style of the layer, comprising setting an icon used by the layer, a font of layer content, and a form of the layer content.

4. The method according to claim 2, wherein the adding the user data layer to the map instance object to generate map data for map display further comprises:
configuring the user data layer and/or the basic data layer based on a content display strategy, wherein the content display strategy comprises a layer content hiding strategy and/or a layer content display density.

5. A map display apparatus, comprising:
a map invoking module, configured to invoke a map instance object, wherein the map instance object comprises one or more basic data layers;
a layer creation module, configured to create a user layer; and
a map generation module, configured to add the user data layer to the map instance object to generate map data for map display, wherein the map generation module comprises:
a conflict detection unit, configured to perform (1110) conflict detection on the basic data layer and the user data layer to obtain a detection result, wherein the detection result is used to describe a display conflict between the user data layer and the basic data layer, wherein a display conflict comprises at least one of content blocking and content repetition;
a conflict resolution strategy obtaining unit, configured to set (1120) at least one conflict resolution strategy for the basic data layer and/or the user data layer based on the detection result, wherein the conflict resolution strategy comprises a layer content hiding strategy if a map instance object has a location that may not be moved and a layer content avoidance strategy if a map instance has a location that may be moved, wherein the layer content hiding strategy comprises being configured to not display the map instance object and layer content avoidance strategy comprises being configured tc move the map instance object; and
a layer configuration unit, configured to configure (1130) the basic data layer and/or the user data layer based on the conflict resolution strategy.

6. A computer-readable storage medium, wherein the computer-readable storage medium stores a computer program, and when the computer program runs on a computer, the computer is enabled to perform the method according to any one of claims 1 to 4.

7. A computer program product comprising instructions which, when the program is executed by a computer, cause the computer to carry out the steps of the method according to any one of claims 1 to 4.

## Patentansprüche

1. Kartenanzeigeverfahren, das umfasst:
Aufrufen eines Karteninstanzobjekts, wobei das Karteninstanzobjekt eine oder mehrere Basisdatenschichten umfasst;
Erstellen einer Benutzerdatenschicht; und
Hinzufügen der Benutzerdatenschicht zu dem Karteninstanzobjekt, um Kartendaten für eine Kartenanzeige zu erzeugen, das umfasst:
Durchführen (1110) einer Anzeigekonflikterkennung auf der Basisdatenschicht und der Benutzerdatenschicht, um ein Erkennungsergebnis zu erhalten, wobei ein Anzeigekonflikt mindestens eines von einem Inhaltsblockieren und einer Inhaltswiederholung umfasst;
Festlegen (1120) mindestens einer Konfliktlösungsstrategie basierend auf dem Erkennungsergebnis, wobei die Konfliktlösungsstrategie eine
Schichtinhaltsverbergungsstrategie, falls ein Karteninstanzobjekt eine Position, die nicht bewegt werden kann, aufweist, und eine Schichtinhaltsvermeidungsstrategie, falls eine Karteninstanz eine Position, die bewegt werden kann, aufweist, umfasst, wobei die Schichtinhaltsverbergungsstrategie ein Nichtanzeigen des Karteninstanzobjekts umfasst und die Schichtinhaltsvermeidungsstrategie ein Bewegen des Karteninstanzobjekts umfasst; und
Konfigurieren (1130) der Basisdatenschicht und/oder der Benutzerdatenschicht basierend auf der Konfliktlösungsstrategie.

2. Verfahren nach Anspruch 1, wobei die Benutzerdatenschicht eine Schicht, die basierend auf Benutzerkartendaten erstellt wird, ist und wobei das Hinzufügen der Benutzerdatenschicht zu dem Karteninstanzobjekt, um Kartendaten für die Kartenanzeige zu erzeugen, ferner umfasst: Konfigurieren der Benutzerdatenschicht basierend auf einem angepassten Stil.

3. Verfahren nach Anspruch 2, wobei der angepasste Stil durch einen Stileditor erzeugt wird und ein Prozess zum Erzeugen des angepassten Stils umfasst:
Auswählen eines Typs einer Schicht, wobei der Typ der Schicht eine Punktschicht, eine Linienschicht und/oder eine Ebenenschicht umfasst; und Anpassen eines Stils der Schicht, das das Festlegen eines Symbols, das durch die Schicht verwendet wird, einer Schriftart des Schichtinhalts und einer Form des Schichtinhalts umfasst.

4. Verfahren nach Anspruch 2, wobei das Hinzufügen der Benutzerdatenschicht zu dem Karteninstanzobjekt, um Kartendaten für die Kartenanzeige zu erzeugen, ferner umfasst: Konfigurieren der Benutzerdatenschicht und/oder der Basisdatenschicht basierend auf einer Inhaltsanzeigestrategie, wobei die Inhaltsanzeigestrategie eine Schichtinhaltsverbergungsstrategie und/oder eine Schichtinhaltsanzeigedichte umfasst.

5. Kartenanzeigevorrichtung, die umfasst:
ein Kartenaufrufmodul, das konfiguriert ist, um ein Karteninstanzobjekt aufzurufen, wobei das Karteninstanzobjekt eine oder mehrere Basisdatenschichten umfasst;
ein Schichterstellungsmodul, das konfiguriert ist, um eine Benutzerschicht zu erstellen; und
ein Kartenerzeugungsmodul, das konfiguriert ist, um die Benutzerdatenschicht zu dem Karteninstanzobjekt hinzuzufügen, um Kartendaten für die Kartenanzeige zu erzeugen, wobei das Kartenerzeugungsmodul umfasst:
eine Konflikterkennungseinheit, die konfiguriert ist, um eine Konflikterkennung auf der Basisdatenschicht und der Benutzerdatenschicht durchzuführen (1110), um ein Erkennungsergebnis zu erhalten, wobei das Erkennungsergebnis verwendet wird, um einen Anzeigekonflikt zwischen der Benutzerdatenschicht und der Basisdatenschicht zu beschreiben, wobei ein Anzeigekonflikt mindestens eines von Inhaltsblockieren und Inhaltswiederholung umfasst;
eine Konfliktlösungsstrategieerhaltungseinheit, die konfiguriert ist, um basierend auf dem Erkennungsergebnis mindestens eine Konfliktlösungsstrategie für die Basisdatenschicht und/oder die Benutzerdatenschicht festzulegen (1120), wobei die Konfliktlösungsstrategie eine Schichtinhaltsverbergungsstrategie, falls ein Karteninstanzobjekt eine Position, die nicht bewegt werden kann, aufweist, und eine Schichtinhaltsvermeidungsstrategie, falls eine Karteninstanz eine Position, die bewegt werden kann, aufweist, umfasst, wobei die Schichtinhaltsverbergungsstrategie umfasst, konfiguriert zu sein, um das Karteninstanzobjekt nicht anzuzeigen, und die Schichtinhaltsvermeidungsstrategie umfasst, konfiguriert zu sein, um das Karteninstanzobjekt zu bewegen; und
eine Schichtkonfigurationseinheit, die konfiguriert ist, um die Basisdatenschicht und/oder die Benutzerdatenschicht basierend auf der Konfliktlösungsstrategie zu konfigurieren (1130).

6. Computerlesbares Speicherungsmedium, wobei das computerlesbare Speicherungsmedium ein Computerprogramm speichert, und, wenn das Computerprogramm auf einem Computer laufen gelassen wird, der Computer aktiviert wird, um das Verfahren nach einem der Ansprüche 1 bis 4 durchzuführen.

7. Computerprogrammprodukt, das Anweisungen umfasst, die, wenn das Programm durch einen Computer ausgeführt wird, den Computer veranlassen, das Verfahren nach einem der Ansprüche 1 bis 4 vorzunehmen.

## Revendications

1. Procédé d'affichage de carte, comprenant :
l'appel d'un objet d'instance de carte, dans lequel l'objet d'instance de carte comprend une ou plusieurs couches de données de base ;
la création d'une couche de données utilisateur ; et
l'ajout de la couche de données utilisateur à l'objet d'instance de carte pour générer des données de carte pour un affichage de carte, comprenant :
la réalisation (1110) d'une détection de conflit d'affichage sur la couche de données de base et la couche de données utilisateur pour obtenir un résultat de détection, dans lequel un conflit d'affichage comprend au moins l'un parmi un blocage de contenu et une répétition de contenu ;
la définition (1120) d'au moins une stratégie de résolution de conflit sur la base du résultat de détection, dans lequel la stratégie de résolution de conflit comprend une stratégie de masquage de contenu de couche si un objet d'instance de couche a un emplacement qui ne pourrait pas être déplacé et une stratégie d'évitement de contenu de couche si une instance de carte a un emplacement qui pourrait être déplacé, dans lequel la stratégie de masquage de contenu de couche comprend le non-affichage de l'objet d'instance de carte et une stratégie d'évitement de contenu de couche comprend le déplacement de l'objet d'instance de carte ; et
la configuration (1130) de la couche de données de base et/ou de la couche de données utilisateur sur la base de la stratégie de résolution de conflit.

2. Procédé selon la revendication 1, dans lequel la couche de données utilisateur est une couche créée sur la base de données de carte utilisateur, et dans lequel l'ajout de la couche de données utilisateur à l'objet d'instance de carte pour générer des données de carte pour un affichage de carte comprend en outre : la configuration de la couche de données utilisateur sur la base d'un style personnalisé.

3. Procédé selon la revendication 2, dans lequel le style personnalisé est généré par un éditeur de style, et un processus de génération du style personnalisé comprend :
la sélection d'un type d'une couche, dans lequel le type de la couche comprend une couche de points, une couche de lignes et/ou une couche de plans ; et
la personnalisation d'un style de la couche, comprenant la définition d'une icône utilisée par la couche, d'une police de contenu de couche et d'une forme du contenu de couche.

4. Procédé selon la revendication 2, dans lequel l'ajout de la couche de données utilisateur à l'objet d'instance de carte pour générer des données de carte pour un affichage de carte comprend en outre :
la configuration de la couche de données utilisateur et/ou de la couche de données de base sur la base d'une stratégie d'affichage de contenu, dans lequel la stratégie d'affichage de contenu comprend une stratégie de masquage de contenu de couche et/ou une densité d'affichage de contenu de couche.

5. Appareil d'affichage de carte, comprenant :
un module d'appel de carte, configuré pour appeler un objet d'instance de carte, dans lequel l'objet d'instance de carte comprend une ou plusieurs couches de données de base ;
un module de création de couche, configuré pour créer une couche utilisateur ; et
un module de génération de carte, configuré pour ajouter la couche de données utilisateur à l'objet d'instance de carte afin de générer des données de carte pour un affichage de carte, dans lequel le module de génération de carte comprend :
une unité de détection de conflit, configurée pour réaliser (1110) une détection de conflit sur la couche de données de base et la couche de données utilisateur afin d'obtenir un résultat de détection, dans lequel le résultat de détection est utilisé pour décrire un conflit d'affichage entre la couche de données utilisateur et la couche de données de base, dans lequel un conflit d'affichage comprend au moins l'un parmi un blocage de contenu et une répétition de contenu ;
une unité d'obtention de stratégie de résolution de conflit, configurée pour définir (1120) au moins une stratégie de résolution de conflit pour la couche de données de base et/ou la couche de données utilisateur sur la base du résultat de détection, dans lequel la stratégie de résolution de conflit comprend une stratégie de masquage de contenu de couche si un objet d'instance de carte a un emplacement qui ne pourrait pas être déplacé et une stratégie d'évitement de contenu de couche si une instance de carte a un emplacement qui pourrait être déplacé, dans lequel la stratégie de masquage de contenu de couche comprend le fait d'être configurée pour ne pas afficher l'objet d'instance de carte et une stratégie d'évitement de contenu de couche comprend le fait d'être configurée pour déplacer l'objet d'instance de carte ; et
une unité de configuration de couche, configurée pour configurer (1130) la couche de données de base et/ou la couche de données utilisateur sur la base de la stratégie de résolution de conflit.

6. Support de stockage lisible par ordinateur, dans lequel le support de stockage lisible par ordinateur stocke un programme informatique, et lorsque le programme informatique est exécuté sur un ordinateur, l'ordinateur est activé pour réaliser le procédé selon l'une quelconque des revendications 1 à 4.

7. Produit-programme d'ordinateur comprenant des instructions qui, lorsque le programme est exécuté par un ordinateur, amènent l'ordinateur à effectuer les étapes du procédé selon l'une quelconque revendication 1 à 4.
